# EUROPÄISCHE PATENTANMELDUNG

(11) **EP 2 789 838 A1**
(43) Veröffentlichungstag der Anmeldung: **15.10.2014**
(21) Anmeldenummer: 14158834.3
(22) Anmeldetag: 11.03.2014
(51) Int. Cl.: F02G 5/02

(54) **Antriebssystem**

(30) Priorität: 12.04.2013 CH 7732013
(71) Anmelder: Liebherr Machines Bulle SA, 1630 Bulle (CH)
(72) Erfinder: Seba, Bouzid, 1636 Broc (CH); Dettmann, Tobias, 19303 Rüterberg (DE); Engeter, Daniel, 90411 Nürnberg (DE)
(74) Vertreter: Laufhütte, Dieter

(57) **Zusammenfassung**

Die vorliegende Erfindung zeigt ein Antriebssystem mit einem Verbrennungsmotor (1) und einem Energierückgewinnungssystem (2) zur Rückgewinnung von Energie aus der Abwärme des Verbrennungsmotors, wobei das Energierückgewinnungssystem einen Fluidkreislauf mit einer Pumpe (3), einem Wärmetauscher (4) und einem Expander (5) aufweist. Dabei wird die Pumpe (3) des Energierückgewinnungssystems durch einen Hydraulikmotor (7) angetrieben.

## Beschreibung

Die vorliegende Erfindung betrifft ein Antriebssystem mit einem Verbrennungsmotor und einem Energierückgewinnungssystem zur Rückgewinnung von Energie aus der Abwärme des Verbrennungsmotors. Insbesondere betrifft die vorliegende Erfindung ein Antriebssystem, bei welchem das Energierückgewinnungssystem ein Fluidkreislauf mit einer Pumpe, einem Wärmetauscher und einem Expander aufweist.

Ein solches Antriebssystem ist aus der EP 2 527 635 A2 bekannt. In dem dort gezeigten Antriebssystem erfolgt der Antrieb der Pumpe des Energierückgewinnungssystems über einen Elektromotor, welcher anhand von Betriebsparametern des Verbrennungsmotors und / oder des Energierückgewinnungssystems angesteuert wird.

Aufgabe der vorliegenden Erfindung ist es, ein Antriebssystem mit einem Verbrennungsmotor und einem Energierückgewinnungssystem zu Verfügung zu stellen, welches einen geringeren Bauraum benötigt und robuster ist.

Diese Aufgabe wird erfindungsgemäß durch ein Antriebssystem gemäß Anspruch 1 gelöst.

Das erfindungsgemäße Antriebssystem umfasst dabei einen Verbrennungsmotor und ein Energierückgewinnungssystem zur Rückgewinnung von Energie aus der Abwärme des Verbrennungsmotors, wobei das Energierückgewinnungssystem ein Fluidkreislauf mit einer Pumpe, einem Wärmetauscher und einem Expander aufweist. Erfindungsgemäß wird die Pumpe des Energierückgewinnungssystems dabei durch einen Hydraulikmotor angetrieben.

Hydraulische Motoren weisen eine deutlich höhere Leistungsdichte als Elektromotoren auf. Hierdurch lässt sich ein erheblicher Bauraumvorteil erreichen. Des Weiteren weist eine hydraulische Pumpe eine höhere Lebensdauer auf. Zudem ist ein Hydraulikmotor unempfindlichen gegen EMV-Einflüsse. Weiterhin wird durch den Einsatz eines Hydraulikmotors die Gefahr von Funkenbildung in der Nähe des Fluidkreislaufs des Energierückgewinnungssystems verringert.

Der Hydraulikmotor kann dabei in einem Ausführungsbeispiel eine Nennleistung zwischen 0,1 kW und 10 kW aufweisen, bevorzugt zwischen 0,5 kW und 3 kW.

Besonders vorteilhaft ist der Einsatz eines Hydraulikmotors dabei dann, wenn ein organisches Betriebsmittel für den Fluidkreislauf des Energierückgewinnungssystems eingesetzt wird. Insbesondere wenn dieses Betriebsmittel brennbar oder gesundheitsgefährdend ist, hat die mit dem Einsatz eines Hydraulikmotors verbundene größere Sicherheit und Robustheit besondere Vorteile.

Besonders bevorzugt kommt die vorliegende Erfindung daher dann zum Einsatz, wenn es sich bei dem Betriebsmittel für den Fluidkreislauf des Energierückgewinnungssystems um Ammoniak, Propan, Ethanol, Methanol oder R 245 sa handelt. Für den Antrieb der Hydraulikpumpe sind dabei unterschiedliche Ausgestaltungen denkbar.

In einer ersten Ausführungsform der vorliegenden Erfindung wird eine Motorölpumpe des Verbrennungsmotors zum Antrieb des Hydraulikmotors eingesetzt. Hierdurch bedarf es zum Antrieb der Hydraulikpumpe keiner zusätzlichen Komponente. Vielmehr kann auf die ohnehin vorhandene Motorölpumpe zurückgegriffen werden. Weiterhin wird die erfindungsgemäße Hydraulikpumpe durch das Motoröl dauerhaft gekühlt. Hierdurch ist der Wärmeeintrag geringer als bei dem Einsatz eines Elektromotors.

Vorteilhafterweise ist in dem Motorölkreislauf dabei neben der Motorölpumpe weiterhin einen Wärmetauscher vorgesehen, über welchen das Motoröl gekühlt wird.

In einer bevorzugten Ausführung der vorliegenden Erfindung wird der Hydraulikmotor parallel zum Verbrennungsmotor an den Motorölkreislauf angeschlossen. Hierdurch kann der Motorölstrom durch den Hydraulikmotor unabhängig von dem Motorölstrom durch den Verbrennungsmotor angesteuert werden.

In einer weiteren Ausführungsform der Erfindung kann dagegen eine separate Pumpe zum Antrieb des Hydraulikmotors eingesetzt werden. Die Pumpe kann dabei in einem Ausführungsbeispiel eine Nennleistung zwischen 0,1 kW und 10 kW aufweisen, bevorzugt zwischen 0,5 kW und 3 kW.

Dabei kann die Pumpe bspw. von dem gleichen Abtrieb des Verbrennungsmotors angetrieben werden wie die Motoröl-Pumpe. Bspw. können beide Pumpen auf der gleichen Welle angeordnet sein.

Weiterhin kann die Pumpe über ein Verteilergetriebe mit dem Verbrennungsmotor in Verbindung stehen.

Die vorliegende Erfindung kann besonders bevorzugt bei einem Antriebssystem zum Einsatz kommen, bei dem der Verbrennungsmotor eine Arbeits- und/oder Fahrhydraulik antreibt. Insbesondere sind dabei eine oder mehrere Pumpen vorgesehen, welche vom Verbrennungsmotor angetrieben werden und den Hydraulikdruck für die Arbeits- und/oder Fahrhydraulik zu Verfügung stellen. Insbesondere werden die Pumpen dabei über ein Pumpenverteilergetriebe angetrieben.

Dabei kann der erfindungsgemäße Hydraulikmotor auch über das Hydrauliksystem der Arbeits- und/oder Fahrhydraulik mit Hydraulikdruck versorgt werden. Allerdings ist das Druckniveau der Arbeits- und/oder Fahrhydraulik üblicherweise zu hoch für den Antrieb des Hydraulikmotors des Energierückgewinnungssystems.

Der Betriebsdruck der der Arbeits- und/oder Fahrhydraulik beträgt dabei bspw. Zwischen 100 und 300 Bar.

Der Betriebsdruck zum Betrieb des erfindungsgemäßen Hydraulikmotors beträgt bevorzugt zwischen 2 und 20 Bar, insbesondere zwischen 3 und 10 Bar.

Bevorzugt wird daher eine separate Pumpe zum Antrieb des Hydraulikmotors eingesetzt.

In einer Ausführungsform der Erfindung kann die Pumpe, welche den Hydraulikmotor antreibt, aber über das Pumpenverteilergetriebe angetrieben werden.

Weiterhin kann das Hydraulikfluid zum Antreiben des Hydraulikmotors einem Tank der Arbeits- und/oder Fahrhydraulik entnommen werden. Hierdurch bedarf es keiner separaten Kühlung.

Das erfindungsgemäße Antriebssystem umfasst dabei in einer ersten Ausführungsform eine Ventilanordnung, welche den Volumenstrom durch den Hydraulikmotor ansteuert.

Dabei kann die Ventilanordnung einen Druckregler umfassen. Weiterhin kann die Ventilanordnung ein Druckbegrenzungsventil umfassen.

Bevorzugt sind dabei der Hydraulikmotor und/oder die Pumpe zum Antrieb des Hydraulikmotors als Konstantmaschinen ausgeführt.

In einer alternativen Ausführungsform handelt es sich bei der Pumpe, welche den Hydraulikmotor ansteuert, um eine Verstellpumpe und/oder bei dem Hydraulikmotor um einen Verstellmotor. In diesem Fall erfolgt die Ansteuerung bevorzugt zumindest auch durch das Verstellen des Schluckvolumens der Pumpe und/oder des Hydraulikmotors.

In einer bevorzugten Ausführungsform des erfindungsgemäßen Antriebssystems umfasst dieses eine Steuerung, welche den Hydraulikmotor und/oder das Energierückgewinnungssystem in Abhängigkeit von Betriebsparametern des Verbrennungsmotors und / oder des Energierückgewinnungssystems ansteuert.

In einer ersten Ausführungsform der vorliegenden Erfindung kann es sich dabei wie oben dargestellt sowohl beim Hydraulikmotor als auch bei der Pumpe des Energierückgewinnungssystems um Konstantverdrängermaschinen handeln, d. h. um einen Motor bzw. eine Pumpe mit konstantem Verdrängervolumen. Vorteilhafterweise erfolgt die Ansteuerung des Hydraulikmotors dabei durch die Steuerung des Volumenstroms durch den Hydraulikmotor.

In alternativen Ausführungsformen der vorliegenden Erfindung könnte auch ein Verstellmotor und / oder eine Verstellpumpe eingesetzt werden. In diesem Fall könnte die Ansteuerung auch durch eine Ansteuerung des Verstellvolumens der Pumpe bzw. des Hydraulikmotors erfolgen.

Bis auf den erfindungsgemäßen Antrieb der Pumpe kann das Antriebssystem gemäß der vorliegenden Erfindung genauso aufgebaut sein und angesteuert werden wie die aus der EP 2 527 635 A2 bekannten Antriebssysteme. Dabei wird der diesbezügliche Inhalt der EP 2 527 635 A2 zum Gegenstand der vorliegenden Anmeldung gemacht.

Insbesondere kann der Wärmetauscher des Energierückgewinnungssystems dabei an das Abgassystem des Verbrennungsmotors angeschlossen sein. Insbesondere wandelt das Energierückgewinnungssystem die im Abgas des Verbrennungsmotors enthaltene Restwärme in mechanische Energie um.

Der Wärmetauscher kann dabei insbesondere im Bereich einer Abgasrückführung des Verbrennungsmotors angeordnet sein.

Weiterhin kann eine Verbindungsanordnung vorgesehen sein, durch welche die vom Energierückgewinnungssystem erzeugte mechanische Energie in die vom Verbrennungsmotor erzeugte mechanische Energie eingekoppelt wird.

Die Verbindungsanordnung kann dabei ein Getriebe umfassen, durch welches eine Abtriebswelle des Energierückgewinnungssystems mit einer Abtriebswelle des Verbrennungsmotors verbunden ist. Insbesondere kann dabei die Abtriebswelle des Expanders mit der Abtriebswelle des Verbrennungsmotors verbunden sein.

Dabei kann vorgesehen sein, dass die Abtriebswelle des Energierückgewinnungssystems über eine Kupplung an die Abtriebswelle des Verbrennungsmotors gekoppelt ist, wobei die Kupplung vorteilhafterweise anhand eines Druckes und / oder einer Temperatur im Energierückgewinnungssystem angesteuert wird.

Der erfindungsgemäße Fluidkreislauf des Energierückgewinnungssystems kann dabei neben dem Wärmetauscher, in welchem das Fluid im Fluidkreislauf vorteilhafterweise durch die Abwärme des Verbrennungsmotors erwärmt wird, weiterhin einen Kondensator aufweisen. Vorteilhafterweise wird dabei das Fluid im Fluidkreislauf zunächst von der Pumpe bedruckt, dann im Wärmetauscher erwärmt, sodass es einen gasförmigen Zustand einnimmt. Vorteilhafterweise wird das Fluid dann im Expander unter Abgabe mechanischer Energie entspannt. Schließlich wird das Fluid im Kondensator abgekühlt und dabei wieder verflüssigt, woraufhin es zur Pumpe bzw. zu einem Tank, an welchen die Pumpe angeschlossen ist, zurückfließt.

Erfindungsgemäß kann der Kondensator des Energierückgewinnungssystems dabei über den Kühlkreislauf des Verbrennungsmotors gekühlt werden.

Weiterhin kann erfindungsgemäß vorgesehen sein, dass der Hydraulikmotor in Abhängigkeit von einem oder mehreren Eingangsparametern angesteuert wird, insbesondere in Abhängigkeit von einem Signal eines vor dem Expander im Fluidkreislauf angeordneten Sensors und / oder in Abhängigkeit von Motorparametern. Bei dem Sensor kann es sich dabei um einen Temperatur- und/oder einen Drucksensor handeln.

Weiterhin kann das Energierückgewinnungssystem eine Bypassleitung aufweisen, durch welche der Fluidmassenstrom im Fluidkreislauf um den Expander herum geführt werden kann.

Insbesondere arbeitet das erfindungsgemäße Energierückgewinnungssystem dabei nach dem Clausius-Rankine-Prinzip.

Die vorliegende Erfindung umfasst neben dem Antriebssystem weiterhin ein Energierückgewinnungssystem mit einem Hydraulikmotor für ein erfindungsgemäßes Antriebssystem. Bevorzugt sind das Energierückgewinnungssystem und der Hydraulikmotor so aufgebaut, wie dies oben näher dargestellt wurde. Insbesondere umfasst das Energierückgewinnungssystem dabei weiterhin die entsprechende Ansteuerung für den Hydraulikmotor.

Die vorliegende Erfindung umfasst weiterhin ein verfahrbares Arbeitsgerät und / oder ein Fahrzeug mit einem Antriebssystem, wie es oben dargestellt wurde. Das Antriebssystem kann dabei insbesondere zum Antrieb eines Fahrwerks und / oder zum Antrieb einer Arbeitsausrüstung des Arbeitsgerätes dienen. Alternativ oder zusätzlich kann das Antriebssystem zum Antrieb einer oder mehrerer Hydraulikpumpen zum Antrieb eines Hydrauliksystems des Arbeitsgerätes oder Fahrzeuges dienen. Insbesondere kann das Hydrauliksystem dabei zum Antrieb einer Arbeitsausrüstung und / oder eines Fahrwerks eines verfahrbaren Arbeitsgerätes dienen.

Die vorliegende Erfindung wird nun anhand eines Ausführungsbeispiels sowie einer Zeichnung näher beschrieben.

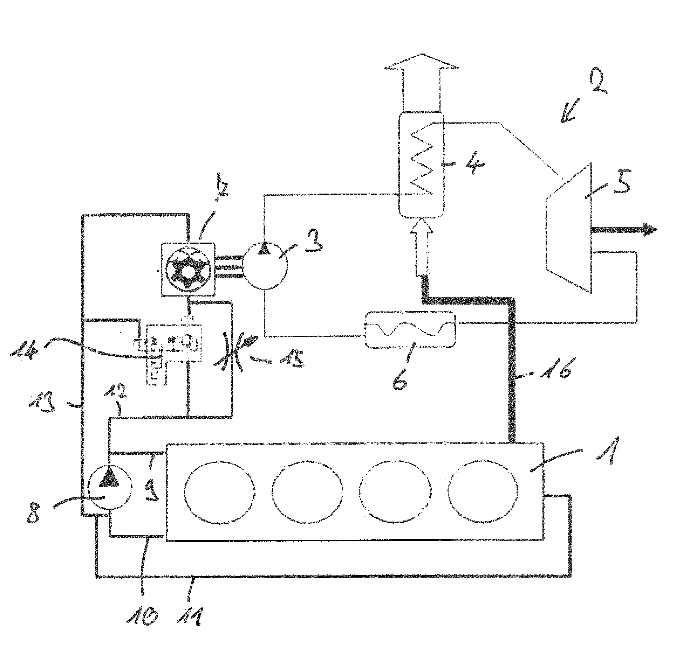

Dabei zeigt die einzige Zeichnung ein Ausführungsbeispiel eines erfindungsgemäßen Antriebssystems aus einem Verbrennungsmotor und einem Energierückgewinnungssystem.

Das Energierückgewinnungssystem weist einen Fluidkreislauf mit einer Pumpe 3, einem Wärmetauscher 4 und einem Expander 5 auf. Der Wärmetauscher 4 ist dabei an dem Abgasstrang des Verbrennungsmotors 1 angeschlossen, so dass die Abwärme des Verbrennungsmotors durch den Wärmetauscher 4 auf das Fluid im Fluidkreislauf des Energierückgewinnungssystems übertragen und durch den Expander 5 in mechanische Energie umgesetzt wird.

Das Fluid wird dabei von der Pumpe 3 bedruckt, nimmt im Wärmetauscher 4 die Abwärme des Abgases auf und wechselt hierdurch in den gasförmigen Zustand. Das gasförmige Medium expandiert dann im Expander 5 unter Abgabe von mechanischer Energie. Im Kreislauf ist weiterhin ein Kondensator 6 vorgesehen, in welchem das gasförmige Medium rekondensiert. Die Pumpe 3 sorgt dabei vor Eintritt des Mediums in den Wärmetauscher für eine Erhöhung des Druckes und für die Zirkulation des Mediums im Fluidkreislauf. Zusätzlich kann im Fluidkreislauf noch ein Tank und / oder ein Filter vorgesehen sein.

Bei dem Fluid im Fluidkreislauf des Energierückgewinnungssystems kann es sich insbesondere um ein organisches Fluid handeln. Bevorzugt handelt das Energierückgewinnungssystem dabei nach dem Clausius-Rankine-Prinzip. Solche Systeme werden daher auch als ORC (Organic Rankine Cycle) bezeichnet.

Erfindungsgemäß wird die Pumpe 3 durch einen Hydraulikmotor 7 angetrieben. Hydraulische Motoren weisen eine deutlich höhere Leistungsdichte als Elektromotoren auf. Hierdurch lässt sich ein erheblicher Packaging-Vorteil erreichen. Des Weiteren weist die hydraulische Pumpe eine höhere Lebensdauer, eine Unempfindlichkeit gegen EMV Einflüsse und eine hohe Sicherheit in brandgefährdeten Umgebungen auf.

Dabei wird der Hydraulikmotor 7 im Ausführungsbeispiel über die Motorölpumpe 8 angetrieben. Der Hydraulikmotor 7 wird hierdurch durch das Motoröl dauerhaft gekühlt. Somit ist auch der Wärmeertrag geringer als bei einem Elektromotor.

Das Motoröl zirkuliert dabei im Motorölkreislauf von der Motorölpumpe 8 über mindestens eine Zulaufleitung 9 durch den Verbrennungsmotor 1 und über eine Rücklaufleitung 10 zurück zur Ölpumpe 8. Im Ausführungsbeispiel ist dabei eine weitere Rücklaufleitung 11 vom Verbrennungsmotor 1 zur Ölpumpe 8 eingezeichnet. Im Motorölkreislauf kann auch ein Wärmetauscher zum Kühlen des Motoröls vorgesehen sein.

Der Hydraulikmotor 7, welcher die Pumpe 3 des Energierückgewinnungssystems antreibt, ist dabei im Ausführungsbeispiel parallel zum Verbrennungsmotor 1 in den Motorölkreislauf einbezogen. Der Hydraulikmotor wird damit über eine separate Zulaufleitung 12 mit Motoröl versorgt, welches über eine Rücklaufleitung 13 zur Motorölpumpe 8 zurückfließt.

Die Ansteuerung des Energierückgewinnungssystems erfolgt dabei im Ausführungsbeispiel durch die Ansteuerung des Volumenstroms durch den Hydraulikmotor 7. Hierdurch kann als Hydraulikmotor ein Konstantmotor und als Pumpe eine Konstantpumpe eingesetzt werden.

Im Ausführungsbeispiel wird der Motorölstrom durch den Hydraulikmotor 7 über einen Druckregler 15 angesteuert. Dabei ist zwischen der Motorölpumpe 8 und dem Hydraulikmotor 7 zusätzlich ein Druckbegrenzungsventil 14 vorgesehen.

Der Hydraulikmotor 7 bzw. der Volumenstrom durch den Hydraulikmotor wird dabei bevorzugt in Abhängigkeit von Betriebsparametern des Verbrennungsmotors 1 oder des Energierückgewinnungssystems angesteuert.

Weiterhin wird die von dem Expander 5 erzeugte Energie bevorzugt in die vom Verbrennungsmotor 1 erzeugte mechanische Energie eingekoppelt. Insbesondere können dabei die Abtriebswellen des Verbrennungsmotors und des Expanders gekoppelt sein, beispielsweise über ein Getriebe und / oder über eine Kupplung.

Bevorzugt wird das erfindungsgemäße Energierückgewinnungssystem dabei in einem verfahrbaren Arbeitsgerät gesetzt. Der Verbrennungsmotor kann dabei insbesondere zum Antrieb des Fahrwerks und / oder der Arbeitsausrüstung dienen. Insbesondere kann der Verbrennungsmotor dabei eine Arbeitshydraulik des verfahrbaren Arbeitsgerätes ansteuern.

Die Ölpumpe 8, die im Ausführungsbeispiel zum Antrieb des Hydraulikmotors 7 eingesetzt wird, wird dabei bevorzugt über den Verbrennungsmotor 1 angetrieben. Hierdurch ergibt sich eine äußerst kompakte Bauform.

Bevorzugt entspricht der Aufbau des Energierückgewinnungssystems, dessen Ansteuerung und dessen Einbindung in das Antriebssystem dabei den aus der EP 2 527 635 A2 bekannten Anordnung.

## Patentansprüche

1. Antriebssystem mit einem Verbrennungsmotor (1) und einem Energierückgewinnungssystem (2) zur Rückgewinnung von Energie aus der Abwärme des Verbrennungsmotors, wobei das Energierückgewinnungssystem einen Fluidkreislauf mit einer Pumpe (3), einem Wärmetauscher (4) und einem Expander (5) aufweist,
**dadurch gekennzeichnet,**
**dass** die Pumpe (3) des Energierückgewinnungssystems durch einen Hydraulikmotor (7) angetrieben wird.

2. Antriebssystem nach Anspruch 1, wobei eine Motoröl-Pumpe (8) des Verbrennungsmotors zum Antrieb des Hydraulikmotors (7) eingesetzt wird.

3. Antriebssystem nach Anspruch 2, wobei der Hydraulikmotor (7) parallel zum Verbrennungsmotor (1) an den Motoröl-Kreislauf angeschlossen ist.

4. Antriebssystem nach einem der vorangegangenen Ansprüche, mit einer separaten Pumpe zum Antrieb des Hydraulikmotors.

5. Antriebssystem nach Anspruch 4, wobei die Pumpe von dem gleichen Abtrieb des Verbrennungsmotors angetrieben wird wie die Motoröl-Pumpe.

6. Antriebssystem nach Anspruch 4, wobei die Pumpe über ein Verteilergetriebe mit dem Verbrennungsmotor in Verbindung steht.

7. Antriebssystem nach einem der vorangegangenen Ansprüche, wobei der Verbrennungsmotor eine Arbeits- und/oder Fahrhydraulik antreibt, wobei die Pumpe, welche den Hydraulikmotor antreibt, vorteilhafterweise über ein Pumpenverteilergetriebe angetrieben wird und/oder wobei das Hydraulikfluid zum Antreiben des Hydraulikmotors vorteilhafterweise einem Tank der Arbeitsund/oder Fahrhydraulik entnommen wird.

8. Antriebssystem nach einem der vorangegangenen Ansprüche, mit einer Ventilanordnung (14, 15), welche den Volumenstrom durch den Hydraulikmotor (7) ansteuert.

9. Antriebssystem nach Anspruch 8, wobei die Ventilanordnung einen Druckregler (15) umfasst.

10. Antriebssystem nach Anspruch 8 oder 9, wobei die Ventilanordnung ein Druckbegrenzungsventil (14) umfasst

11. Antriebssystem nach einem der vorangegangenen Ansprüche, wobei es sich bei der Pumpe, welche den Hydraulikmotor ansteuert, um eine Verstellpumpe handelt, und/oder wobei es sich bei dem Hydraulikmotor um einen Verstellmotor handelt.

12. Antriebssystem nach einem der vorangegangenen Ansprüche, mit einer Steuerung, welche den Hydraulikmotor (7) in Abhängigkeit von Betriebsparametern des Verbrennungsmotors (1) und/oder des Energierückgewinnungssystems (2) ansteuert.

13. Antriebssystem nach einem der vorangegangenen Ansprüche, wobei der Wärmetauscher (4) des Energierückgewinnungssystems an das Abgassystem des Verbrennungsmotors (1) angeschlossen ist, wobei der Wärmetauscher insbesondere im Bereich einer Abgasrückführung angeordnet ist.

14. Energierückgewinnungssystem mit einem Hydraulikmotor für ein Antriebssystem nach einem der vorangegangenen Ansprüche.

15. Verfahrbares Arbeitsgerät und/oder Fahrzeug mit einem Antriebssystem nach einem der vorangegangenen Ansprüche, wobei das Antriebssystem vorteilhafterweise zum Antrieb eines Fahrwerks und/oder einer Arbeitsausrüstung dient, und/oder wobei das Antriebssystem eine Hydraulikpumpe eines Hydrauliksystems antreibt.
